# EUROPÄISCHE PATENTSCHRIFT

(11) **EP 1 530 817 B1**
(45) Veröffentlichungstag und Bekanntmachung des Hinweises auf die Patenterteilung: **02.09.2009**
(21) Anmeldenummer: 03722032.4
(22) Anmeldetag: 28.04.2003
(51) Int. Cl.: H02J 9/00

(54) **LADENETZTEIL**
POWER SUPPLY UNIT
BLOC D'ALIMENTATION

(30) Priorität: 14.05.2002 AT 7372002
(43) Veröffentlichungstag der Anmeldung: 18.05.2005
(73) Patentinhaber: Siemens AG Österreich, 1210 Wien (AT)
(72) Erfinder: SCHWEIGERT, Harald, A-1120 Wien (AT)
(86) Internationale Anmeldenummer: PCT/AT2003/000119
(87) Internationale Veröffentlichungsnummer: WO 2003/096508

(56) Entgegenhaltungen:
- EP-A- 1 225 675
- WO-A-98/38720
- DE-A- 19 809 999
- DE-U- 20 014 724
- BONEKAMP H: "MAINS ADAPTOR SWITCH. IMPROVES ADAPTOR EFFICIENCY" ELEKTOR ELECTRONICS, ELEKTOR PUBLISHERS LTD. CANTERBURY, GB, Bd. 25, Nr. 283, Dezember 1999 (1999-12), Seiten 24-27, XP000924299 ISSN: 0268-4519

## Beschreibung

Die Erfindung bezieht sich auf ein Ladenetzteil für ein akkumulatorengespeistes elektrisches/elektronisches Gerät, mit einem galvanisch trennenden Transformator, der an seinem Primärkreis aus einem Stromnetz speisbar ist und dessen Sekundärkreis einen Um-/Gleichrichter zur Lieferung einer Ladespannung für den Akkumulator des Gerätes aufweist, wobei Ladenetzteil und Gerät über eine elektrische Steckschnittstelle verbindbar sind.

Ladenetzteile dieser Art sind in vielen Varianten bekannt und werden in größtem Umfang verwendet, insbesondere für Mobiltelefone, Laptop und Handheld-Computer, kleine Haushaltsgeräte etc.

Über die elektrische Steckschnittstelle wird der zu ladende Akkumulator des Gerätes mit dem Ladenetzteil verbunden, welches dem Ladezustand entsprechend Energie liefert. Eine Vielzahl bekannter Schaltungen kann auch je nach Akkumulatorentyp für ein "intelligentes Laden" sorgen, wobei ein Teil der Ladelektronik, z. B. Spannungs- oder Temperatursensoren in dem Gerät, z. B. einem Handy, enthalten sein können. Die Trennung Ladenetzteil- Gerät kann somit eine fließende sein und ist nicht einschränkend zu verstehen.

Bekannte Ladenetzteile nehmen im Leerlauf-Betrieb, d. h. bei nicht angeschlossenem Gerät, zwar eine nur geringe Leistung auf, doch ist die Gesamtleistung von Millionen solcher Ladegeräte alles andere als vernachlässigbar, wenn man bedenkt, dass jedes am Netz angesteckte Ladegerät im Leerlauf eine Verlustleistung in der Größenordnung von typischerweise 0,2 bis 2 Watt (bei Mobiltelefonen) aufweist. Auf diese Weise wird Energie, die anderswo sinnvoll eingesetzt werden könnte, völlig nutzlos vernichtet.

Das gesamte Problem ist bekannt und man hat versucht, hier Abhilfe zu schaffen. Von der einfachsten Möglichkeit, nämlich das Ladenetzteil bei Nichtbedarf vom Netz abzustecken, wird aus Bequemlichkeit oder Vergesslichkeit kaum Gebrauch gemacht. Bekannt gewordene Lösungen reduzieren die Taktfrequenz des Schaltnetzteils eines Ladegeräts bei Wegfall von Ladeleistung oder es wird in vorbestimmten Zeitabständen ein Hochlaufen des Ladenetzteils durchführt um zu testen, ob Leistung geliefert werden soll. Auch in diesen Fällen sind trotz eines hohen Aufwands für die Elektronik die Leerlaufverluste noch immer nicht vernachlässigbar.

Als erste Konsequenz aus der Forderung nach sehr geringem Leerlaufverlusten vermeidet man 50 Hz-Netztransformatoren bei Ladenetzteilen, da deren magnetische Verluste nicht zu verringern sind, und verwendet Schaltnetzteile mit einem Übertrager, der die üblicherweise galvanische Trennung von dem Netz ermöglicht.

Ein als Schaltnetzteil ausgeführtes Ladenetzteil LNT nach dem Stand der Technik ist in Fig. 1 dargestellt. Die Netzwechselspannung von z. B. 230 Volt wird mittels eines Gleichrichters D1, hier einer Diode, üblicherweise eine Diodenbrücke, gleichgerichtet, um eine Zwischenkreisspannung an einem Zwischenkreiskondensator C1 zu erzeugen. Diese Zwischenkreisspannung wird mit Hilfe eines von einer Ansteuerschaltung AST gesteuerten Schalters S, z. B. eines Schalttransistors an eine Primärwicklung Wp eines Übertragers TRA gelegt, wobei in bekannter Weise ein Rechteckpuls mit änderbarem Tastverhältnis verwendet wird.

Die Ansteuerschaltung AST wird während des Betriebes über eine Hilfswicklung Wh und einen Hilfsgleichrichter D3 von einer Gleichspannung gespeist, die an einem Kondensator C2 liegt, und einige Volt, z. B. 9 bis 12 Volt beträgt. Da diese Spannung erst bei hochgelaufenem Schaltnetzteil vorhanden ist, wird zum Starten eine Hilfsspannung benötigt, die aus der hohen Zwischenkreisspannung, z. B. 320 Volt, über einen hochohmigen Vorwiderstand R1 und eine Zenerdiode D2 abgeleitet wird. Da an dem Vorwiderstand R1 eine Spannung in der Größenordnung von 300 Volt liegt, treten hier, auch wenn ein Strom nur im mA-Bereich fließt, nicht vernachlässigbare Dauerverluste auf.

Der Primärstrom durch die Wicklung Wp wird gleichfalls in bekannter Weise an einem niederohmigen Widerstand R2 gemessen und diese Information wird der Ansteuerschaltung AST zugeführt. Sekundärseitig wird die Spannung einer Sekundärwicklung Ws mittels eines Gleichrichters GLR für eine Diode gleichgerichtet und steht an einem Kondensator C3 bzw. an Kontakten einer Steckschnittstelle SSS zur Verfügung. Mit dieser Spannung soll der Akkumulator AKV eines elektrischen/elektronischen Geräts HAN, z. B. eines Handys, geladen werden. Wenngleich hier einfachheitshalber gezeigt, liegt die Ausgangsspannung des Netzteils LNT üblicherweise nicht direkt an dem zu ladenden Akkumulator, sondern z. B. über einen Schalttransistor.

Die Spannung und/oder der Strom am Ausgang des Netzteils LNT können in bekannter Weise geregelt werden. Hier wird beispielsweise ein mit der Ausgangsspannung in Beziehung stehendes Signal von einer Regelschaltung URE gewonnen und über einen Optokoppler OKO galvanisch getrennt an die Ansteuerschaltung AST der Primärseite geliefert.

Aus der JP 09007644 A geht ein Batterieteil für ein batteriebetriebenes Gerät hervor, welcher über einen Gleichspannungs/Gleichspannungswandler eine von der Batteriespannung unabhängige Gleichspannung für das Gerät liefert. Ein Batteriespannungsdetektor zeigt an einem eigenen Ausgang des Batterieteils die Restspannung bzw. Restladung der Batterie an. Über ein Laden der Batterie trifft dieses Dokument keine Aussage.

In der WO 98/38720 A ist ein Batterieladegerät mit niedrigem Standby-Strom beschrieben, wobei letzterer dadurch erreicht wird, dass die Spannung des zu ladenden Akkumulatirs gemessen, insbesondere mit einem Referenzwert verglichen wird. Davon ausgehend wird entschieden, ob eine Ladeschaltung aktiviert wird oder nicht.

Aus der DE 200 14 724 U geht ein Netzteil in SOHz-Technik mit Längsregler hervor. Nur wenn ein Verbraucher angeschlossen wird, wird das Netzteil eingeschaltet. Zu diesem Zweck ist in dem Netzteil ein besonderer 9V-Akkumulator vorgesehen. Gegenstand dieses Dokuments ist nicht das Laden dieses Akkumulators, der als Stützbatterie dient.

In dem Artikel Bonekamp H., "Mains Adaptor Switch Improves Adaptor Efficiency", Elektor Electronics, Elektor Publishers Ltd., Canterbury, GB, Bd. 25, Nr. 283, Dezember 1999 (1999-12), Seiten 24 - 27, XP000924299, ISSN: 0268-4519, ist ein Netzteil beschrieben, das gleichfalls in Abhängigkeit von der Spannung an seinem Ausgang, d.h. der Spannung an der Last, ein- oder ausgeschaltet wird. Im Gegensatz zu der vorhin beschriebenen Lösung wird hier ein Pufferkondensator verwendet, der immer wieder aufgeladen werden kann. Ohne Last erfolgt dieses Aufladen etwa alle zwei Minuten für kurze Zeit, dazwischen ruht das Netzteil.

Die EP 1225 675 A1 beschreibt ein Ladegerät für ein Mobilteil, bei welchem das Ladenetzteil nur eingeschaltet wird, wenn das Mobilteil sich in seiner Halterung befindet. Dieses Einschalten kann mechanisch und/oder elektrisch durch Stromdetektion erfolgen. Eine galvanische Trennung im Sinne einer Isolierschnittstelle ist nicht vorgesehen.

Eine Aufgabe der Erfindung liegt nun in der Schaffung eines Ladenetzteils, bei welchem die Leerlaufverluste stark verringert oder völlig eliminiert sind.

Diese Aufgabe wird mit einem Ladenetzteil der eingangs genannten Art gelöst, bei welchem erfindungsgemäß bei Herstellen der Verbindung an der Steckschnittstelle aus der Restspannung des Akkumulators ein Einschaltsignal ableitbar ist, welches über eine Isolierschnittstelle von dem Sekundärkreis an den Primärkreis zur Aktivierung des Ladenetzteils weiterleitbar ist.

Die Erfindung macht sich den Umstand zunutze, dass der zu ladende Akkumulator in der Praxis immer noch eine Restspannung aufweist. Mag auch diese Spannung stark unter der Nennspannung liegen und für den Betrieb des Geräts nicht ausreichen, so ist sie doch groß genug, um ein Einschaltsignal zum Aktivieren des Ladenetzteils zu erzeugen.

Da nach Trennen der Steckschnittstelle das Schaltnetzteil nicht notwendigerweise von selbst in den Stand-by-Betrieb zurückfällt, kann es zweckmäßig sein, wenn bei Trennen der Steckschnittstelle ein Abschaltimpuls erzeugbar ist.

Bei einer einfach realisierbaren Variante ist vorgesehen, dass die Isolierschnittstelle von der Wicklung eines Relais und einem Relaiskontakt gebildet ist.

Eine andere zweckmäßige und gleichfalls kostengünstig realisierbare Variante sieht vor, dass die Isolierschnittstelle von einer Optokopplerstrecke gebildet ist. Dabei ist mit Vorteil das lichterzeugende Element der Optokopplerstrecke eine lichtemittierende Diode.

Bei einer zweckmäßigen Variante ist vorgesehen dass, das lichtgesteuerte Element der Optokopplerstrecke ein Foto-TRIAC-Schalter ist, der in dem Primärkreis einen Wechselstrom-Netzschalter bildet.

Bei einer anderen, gleichfalls vorteilhaften Ausführung sieht man vor, dass das fotoempfindliche Element der Optokopplerstrecke ein Fototransistor ist, der primärseitig als Schalter bzw. Teil eines Schalters zwischen einem Netzgleichrichter und einem Zwischenkreis gelegen ist.

Weiters ist bei einer anderen praxisgerechten Ausführung vorgesehen, dass ein lichtempfindlicher Schalter der Optokopplerstrecke zwischen dem Zwischenkreis und einer primären Ansteuerschaltung des als Schaltnetzteil ausgebildeten Ladenetzteils gelegen ist.

Eine hinsichtlich der Isolierschnittstelle anders ausgebildet, doch gleichfalls günstige Variante sieht vor, dass die Isolierschnittstelle von einem Impulsübertrager gebildet ist, der zum Übertragen eines bei Herstellen der Steckschnittstellenverbindung erzeugten Einschaltimpulses an eine primäre Ansteuerschaltung des als Schaltnetzteil ausgebildeten Ladenetzteils des Primärkreises vorgesehen ist. Dabei kann es empfehlenswert sein, wenn eine primäre Ansteuerschaltung des als Schaltnetzteil ausgebildeten Ladenetzteils einen elektronischen Schalter besitzt, dem der Einschaltimpuls zuführbar ist und der bei Trennen der Steckschnittstelle erzeugte Abschaltimpuls gleichfalls über den Impulsübertrager an den Schalter führbar ist, welcher von seinem Ein-Zustand in seinen Aus-Zustand kippt.

Wieder eine andere zweckmäßige Variante ist **dadurch gekennzeichnet, dass** ein einen Übertrager aufweisender Hilfsschaltwandler vorgesehen ist, der bei Herstellen der Steckschnittstellenverbindung an die Restspannung des Akkumulators gelegt wird und eine Start-Versorgungsspannung für eine primäre Ansteuerschaltung des als Schaltnetzteil ausgebildeten Ladenetzteils liefert.

Die Erfindung samt weiterer Vorteile ist im folgenden anhand beispielsweise Ausführungsformen näher erläutert, die in der Zeichnung veranschaulicht sind. In dieser zeigen
- Fig. 2: ein Prinzip-Blockschaltbild nach Erfindung,
- Fig.3: das Prinzipschaltbild einer ersten Ausführungsform unter Verwendung einer Optokopplerstrecke,
- Fig. 4: das Prinzipschaltbild einer Ausführungsform, welche ein Relais verwendet,
- Fig. 5: das Prinzipschaltbild einer Variante, welche einen Hilfsschaltwandler zum Erzeugen eines Einschaltsignals benutzt.
- Fig. 6: das Prinzipschaltbild einer Variante, welche einen Einschaltimpuls über einen Impulsübertrager zur Primärseite bringt,
- Fig.7: das Prinzipschaltbild einer zweiten Ausführungsform, welche eine Optokopplerstrecke verwendet,
- Fig. 8: das Prinzipschaltbild einer dritten Ausführungsform, welche eine Optokopplerstrecke verwendet und
- Fig. 9: das Schaltbild einer einfachen Ausführungsform unter Verwendung eines Netztransformators und einer Optokopplerstrecke.

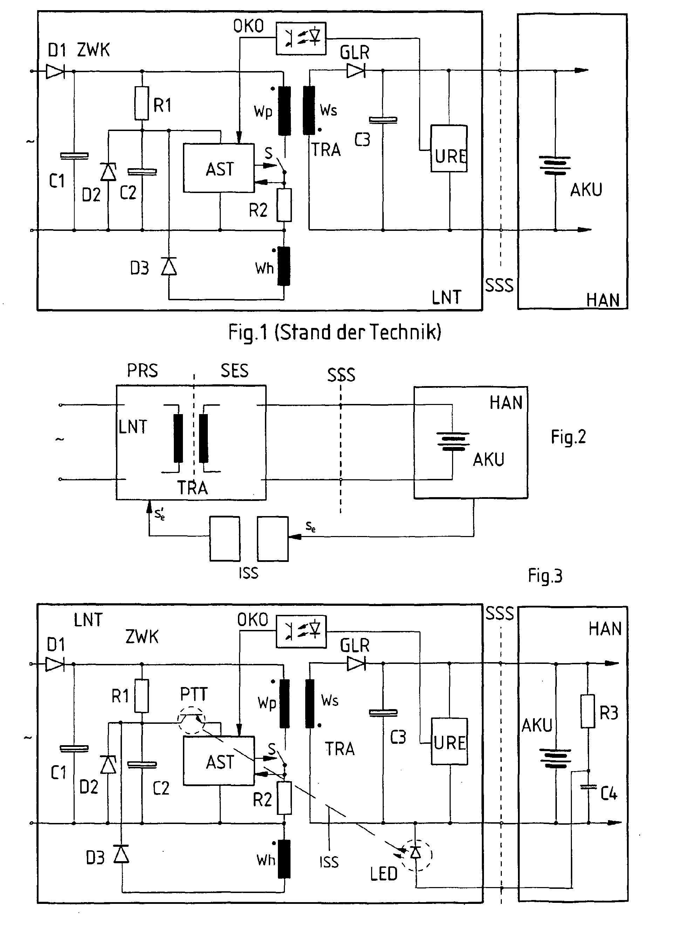

Fig. 2 zeigt ein Ladenetzteil LNT, welches beispielsweise wie jenes nach Fig. 1 als Schaltnetzteil ausgeführt ist und einen die am Netz liegende Primärseite PRS von der Sekundärseite SES trennenden Transformator TRA besitzt. Über eine Steckschnittstelle SSS, z. B. eine bei Handys übliche mehrpolige Steckverbindung, wird die Ausgangsspannung des Netzteils LNT dem Akkumulator AKU eines Geräts HAN zugeführt. Die Erfindung sieht nun vor, dass bei Herstellen der Verbindung an der Steckschnittstelle SSS, z. B. dem Anstecken des Ladesteckers an ein Handy, aus der Restspannung des Akkumulators AKU ein Einschaltsignal sₑ abgeleitet bzw. erzeugt und über eine Isolierschnittstelle ISS von dem Sekundärkreis SES als primäres Einschaltsignal sₑ' an den Primärkreis PRS weitergeleitet wird, um das Ladenetzteil LNT zu aktivieren.

Wie im folgenden anhand der Ausführungsbeispiele nach den Fig. 3 bis 9 zu erläutern ist, kann das Einschaltsignal sₑ ein einmaliger Impuls oder ein Dauersignal sein und die galvanisch trennende Schnittstelle kann beispielsweise als Optokoppler, Relais oder Übertrager ausgebildet sein.

Die Ausführung nach Fig. 3 geht von einem Ladenetzteil nach Fig. 1 (Stand der Technik) aus, weist jedoch nachstehende Modifikationen auf. An der Steckschnittstelle SSS ist ein zusätzlicher Kontakt vorgesehen, über den die Restspannung des Akkumulators AKU, im vorliegenden Fall die Spannung an einem Kondensator C4, der über einen Widerstand R3 von dem Akkumulator AKU auf dessen aktuelle Spannung aufgeladen ist, bei Herstellen der Verbindung an der Steckschnittstelle SSS an eine lichtemittierende Diode LED gelegt wird. Über die optische Isolierschnittstelle ISS wird dadurch ein Fototransistor PTT durchgeschaltet, der zwischen dem Versorgungsspannungseingang der Ansteuerschaltung (AST) und dem Kondensator C2 - vgl. Fig. 1 - liegt. Der Widerstand R1 ist so hochohmig, dass ein Dauerbetrieb der Ansteuerschaltung AST nicht möglich wäre, doch genügt die in dem Kondensator C2 gespeicherte Energie für das Anlaufen des Schaltwandlers. Sodann erfolgt die Versorgung der Ansteuerschaltung AST über die Hilfswicklung Wh und die Diode D3. Auch die Diode LED bleibt nun aktiviert und der Transistor PTT durchgeschaltet. Bei Trennen der Schnittstelle SSS wird der Stand-by-Zustand wieder hergestellt.

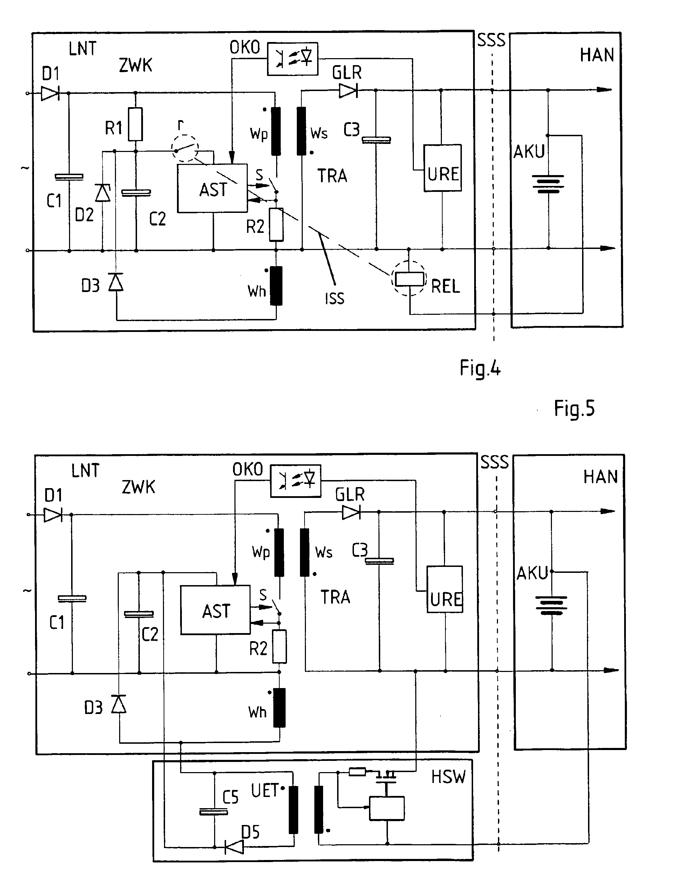

Ein anderer Lösungsweg wird bei der Schaltung nach Fig. 4 beschrieben, in welcher gegenüber Fig. 3 die lichtemittierende Diode LED durch die Wicklung REL eines Relais und der Transistor PTT durch einen Arbeitskontakt r dieses Relais REL,r ersetzt ist. Bei Herstellen einer Verbindung an der Schnittstelle SSS wird die Relaiswicklung REL an die (Rest)spannung des Akkumulators AKU gelegt, das Relais zieht an und der Kontakt wird geschlossen.

Ebenso wie bei Fig. 3 erhält die Ansteuerschaltung AST einen Spannungsimpuls, der für das Anlaufen des Schaltwandlers genügt. Danach bleibt das Relais REL,r solange erregt, bis die Verbindung an der Schnittstelle SSS wieder gelöst wird.

Einen anderen Weg beschreitet die Lösung nach Fig. 5. Hier sind der Widerstand R1 und die Zenerdiode D2 der Fig. 3 und 4 entfallen, sodass primärseitig im Stand-by-Betrieb überhaupt kein Strom fließt. Um ein Hochlaufen des Schaltwandlers zu ermöglichen, ist ein Hilfsschaltwandler HSW vorgesehen, der bei Herstellen einer Verbindung an der Steckschnittstelle SSS mit seinem Eingang an die Spannung des Akkumulators AKU gelegt wird, was direkt - wie hier - oder indirekt erfolgen kann. Der Hilfsschaltwandler HSW, z. B. ein Sperrwandler, muss einen Übertrager UET mit galvanisch getrennten Wicklungen enthalten, sonst ist sein Aufbau beliebig, wobei eine Dimensionierung nur für Kurzzeitbetrieb erfolgt. Von den dem Stand der Technik entsprechenden Schaltelementen sind hier lediglich ein Gleichrichter D5 und ein Kondensator C5 eingezeichnet, wobei letzterer wegen des Kondensators C2 des Ladenetzteils LNT auch entfallen kann.

Der Hilfswandler HSW versorgt nun zumindest während des Anlaufens die Ansteuerschaltung (AST) mit einer Betriebsspannung, wobei als Alternative die Hilfsspannungsversorgung Wh, D3 des Ladenetzteils LNT auch entfallen kann, was jedoch bei der Dimensionierung des Hilfswandlers HSW zu berücksichtigen ist.

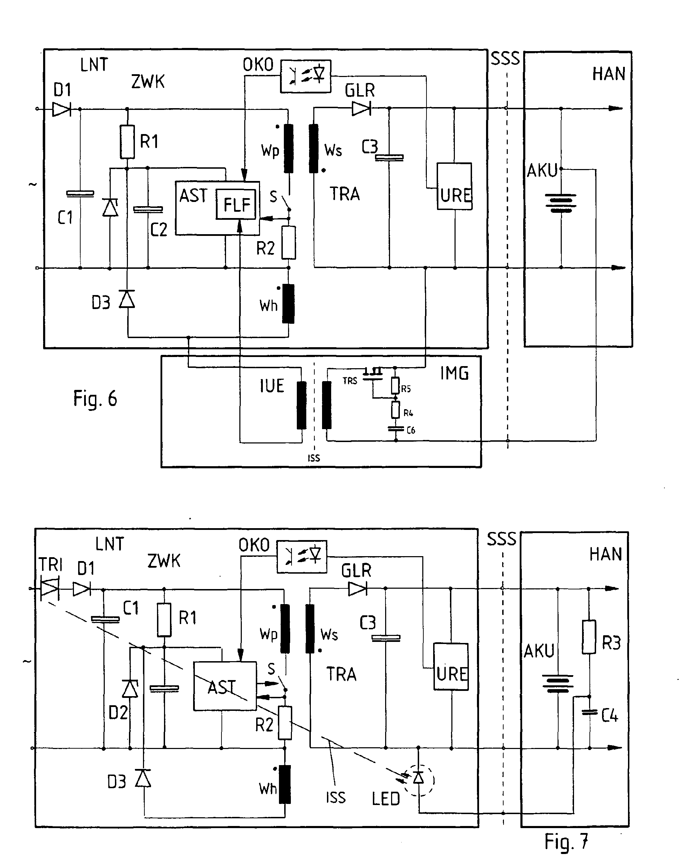

Die Variante nach Fig. 6 gleicht hinsichtlich der Ausbildung des Ladenetzteils LNT weitgehend den Ausführungen der Fig. 3 und 4. Es ist hier ein elektronischer Schalter FLF, z. B. ein Flip-Flop vorgesehen, das z. B. in der Ansteuerschaltung AST enthalten sein kann, aber nicht muss. Weiters ist ein Impulsgeber IMG vorgesehen, dem die Aufgabe zukommt, bei Herstellen der Verbindung an der Schnittstelle SSS einen Impuls zu erzeugen und galvanisch getrennt an den Schalter FLF zu führen, welcher für das Anlaufen des Ladenetzteils LNT sorgt, indem er beispielsweise die an dem Kondensator C2 liegende Spannung an die Elektronik der Schaltung AST legt. Bei Lösen der Schnittstelle SSS wird ein weiterer Impuls erzeugt, welcher den Schalter FLF wieder zurückkippt und den Stand-by-Zustand wieder herstellt.

Die Realisierung des Impulsgebers IMG kann beispielsweise auf die in Fig. 6 skizzierte Art erfolgen, wobei ein Ende der Primärwicklung eines Impulsübertrages IUE über einen Kontakt der Schnittstelle SSS an die Spannung des Akkumulators AKU legbar ist, wogegen das andere Wicklungsende über einen FET-Transistor TRS an Masse liegt. Das Gate dieses Transistors TRS ist über die Serienschaltung eines Widerstands R4 und eines Kondensators C6 gleichfalls mit dem erwähnten Kontakt der Schnittstelle verbunden und liegt andererseits über einen Widerstand RS an Masse. Diese Schaltung ermöglicht es, dass jedes Mal beim Anoder Abstecken des Ladenetzteils LNI an oder von dem Gerät HAN ein Impuls erzeugt und - galvanisch getrennt - von der Sekundärwicklung des Impulsübertragers IUE an den Schalter FLF gesandt wird.

Die Schaltungsvariante nach Fig. 7 ist weitgehend wie jene nach Fig. 3 aufgebaut. Sie unterscheidet sich dadurch, dass der Betriebsspannungseingang der Ansteuerschaltung AST mit dem Pluspol des Kondensators C2 immer verbunden ist und nicht - wie nach Fig. 3 - über einen Fototransistor. Hingegen ist zwischen den Gleichrichter D1 des Zwischenkreises ZWK und das Wechselstromnetz ein Foto-TRIAC-Schalter TRI als Netzschalter geschaltet, welcher das zweite Element der Isolierschnittstelle ISS, d. h. hier der Optokopplerstrecke LED-TRI bildet. Während des Betriebes gibt die Diode LED ein Dauerlichtsignal ab, welches den Schalter TRI geschlossen hält, bis die Schnittstelle SSS wieder gelöst wird. Auch bei dieser Lösung wird im Stand-By-Betrieb kein Strom aus dem Netz entnommen.

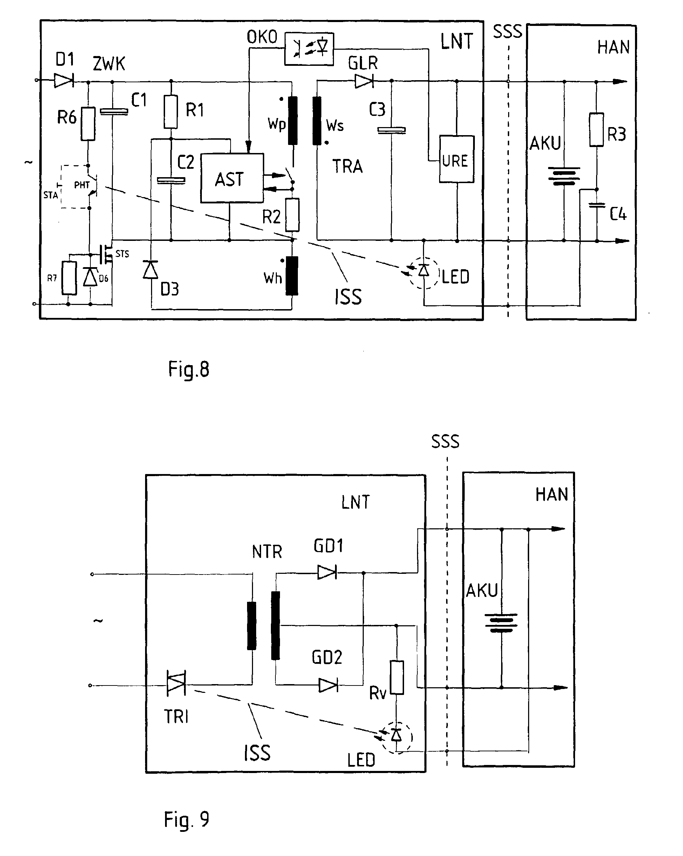

Eine andere, jedoch ähnliche Variante der Erfindung ist in Fig. 8 dargestellt. Hier ist das zweite Element der Optokopplerstrecke ein Fototransistor PHT, der zur Ansteuerung eines Schalttransistors STS dient. Dieser Transistor STS liegt als Schalter zwischen dem Netzgleichrichter D1 und dem Zwischenkreiskondensator C1. Der Fototransistor PHT liegt mit seinem Kollektor über einen Widerstand R6 an dem Pluspol des Zwischenkreiskondensators C1, mit seinem Emitter an dem Gate des Schalttransistors STS. Letzteres liegt über einen Widerstand R7 und - parallel dazu - eine Zenerdiode D6 an Masse. Auch hier ist im Stand-by-Betrieb sichergestellt, dass keinerlei Leistung aufgenommen wird.

Anhand der Fig. 8 wird - stellvertretend für sämtliche Ausführungsformen - die mögliche Verwendung eines Starttasters STA erläutert, der strichliert eingezeichnet, parallel zu dem Fototransistor PHT liegt und diesen überbrücken kann, falls die Restspannung des Akkumulators AKU aus irgendwelchen Gründen so gering ist, dass kein hinreichend großes Einschaltsignal sₑ erzeugbar ist. In diesem Fall kann der Benutzer des Geräts und des Ladenetzteils durch kurzen Druck auf den Starttaster STA den Ladebetrieb einleiten.

Die Ausführung nach Fig. 9 zeigt, dass das Ladenetzteil LNT nicht notwendigerweise als Schaltnetzteil ausgeführt sein muss. Gezeigt ist hier ein Netztransformator NTR, dessen Primärwicklung über einen Foto-TRIAC-Schalter TRI an das Wechselstromnetz schaltbar ist, wogegen aus der mittenangezapften Sekundärwicklung durch Gleichrichtung mit zwei Dioden GD1, GD2 die Ladespannung für den Akkumulator AKU des Geräts HAN gewonnen wird. Wieder kann, so wie nach Fig. 7, über einen Kontakt der Steckschnittstelle SSS bei Anstecken des Ladenetzteils LNT an das Gerät HAN eine lichtemittierende Diode LED betrieben werden, deren Vorwiderstand Rv sich hier im Ladenetzteil LNT befindet. Dadurch wird der TRIAC-Schalter TRI leitend und das Ladenetzteil LNT liefert solange Spannung, bis die Verbindung an der Steckschnittstelle SSS gelöst wird. Die Ausführung nach Fig. 9 macht deutlich, dass durch die Erfindung auch Netzfrequenztransformatoren insofern sinnvoll verwendbar sind, als bei von dem Ladenetzteil abgesteckten Gerät die Verluste Null sind.

## Patentansprüche

1. Ladenetzteil (LNT) für ein akkumulatorengespeistes elektrisches/elektronisches Gerät (HAN), mit einem galvanisch trennenden Transformator (TRA), der an seinem Primärkreis (PRS) aus einem Stromnetz speisbar ist und dessen Sekundärkreis (SES) einen Um-/Gleichrichter (GLR) zur Lieferung einer Ladespannung für den Akkumulator (AKU) des Gerätes aufweist, wobei Ladenetzteil und Gerät über eine elektrische SteckSchnittstelle (SSS) mittels Ladekontakte verbindbar sind,
**dadurch gekennzeichnet, dass**
bei Herstellern der Verbindung an der Steckschnittstelle (SSS) über einen zusätzlichen Kontakt aus der Restspannung des Akkumulators (AKU) ein Einschaltsignal (sₑ) ableitbar ist, welches über eine Isolierschnittstelle (ISS) von dem Sekundärkreis (SES) an den Primärkreis (PRS) zur Aktivierung des Ladenetzteils (LNT) weiterleitbar ist.

2. Ladenetzteil nach Anspruch 1, **dadurch gekennzeichnet, dass** bei Trennen der Steckschnittstelle (SSS) ein Abschaltimpuls erzeugbar ist.

3. Ladenetzteil nach Anspruch 1 oder 2, **dadurch gekennzeichnet, dass** die Isolierschnittstelle (ISS) von der Wicklung (REL) eines Relais (REL,r) und einem Relaiskontakt (r) gebildet ist (Fig. 4).

4. Ladenetzteil nach Anspruch 1 oder 2, **dadurch gekenntzeichnet, dass** die Isolierschnittstelle (ISS) von einer Optokopplerstrecke (LED; PTT, PHT, TRI) gebildet ist (Fig. 3, 7, 8, 9).

5. Ladenetzteil nach Anspruch 4, **dadurch gekennzeichnet, dass** das lichterzeugende Element der Optokopplemtrecke eine lichtemittierende Diode (LED) ist.

6. Schaltnetzteil nach Anspruch 4 oder 5, **dadurch gekennzeichnet, dass** das lichtgesteuerte Element der Optokopplerstrecke ein Foto-TRIAC-Schatter (TRI) ist, der in dem Primärkreis einen Wechselstrom-Netzschalter bildet (Fig. 7, 9).

7. Ladenetzteil nach Anspruch 4 oder 5, **dadurch gekennzeichnet, dass** das fotoempfindliche Element der Optokopplerstrecke ein Fototransistor (PHT) ist, der primärseitig als Schalter bzw. Teil eines Schalters zwischen einem Netzgleichrichter (D1) und einem Zwischenkreis (ZKW) gelegen ist. (Fig. 8)

8. Ladenetzteil nach Anspruch 4 oder 5, **dadurch gekennzeichnet, dass** ein lichtempfindlicher Schalter (PTT) der Optokopplerstrecke zwischen dem Zwischenkreis (ZKW) und einer primären Ansteuerschaltung (AST) des als Schaltnetzteil ausgebildeten Ladenetzteils gelegen ist (Fig. 2),

9. Ladenetzteil nach Anspruch 1, **dadurch gekenntzeichnet, dass** die Isolierschnittstelle (ISS) von einem Impulsübertrager (IUE) gebildet ist, der zum Übertragen eines bei Herstellen der Steckschnittstellenverbindung erzeugten Einschaltimpulses an eine primäre Ansteuerschaltung (AST) des als Schaltnetzteil ausgebildeten Ladenetzteils des Primärkreises vorgesehen ist (Fig. 6).

10. Ladenetzteil nach Anspruch 1, 2 und 9, **dadurch gekennzeichnet, dass** eine primäre Ansteuerschaltung (AST) des als Schaltnetzteil ausgebildeten Ladenetzteils einen elektronischen Schalter (FLF) besitxt, dem der Einschaltimpuls zuführbar ist und der bei Trennen der Steckschnittstelle (SSS) erzeugte Abschaltimpuls gleichfalls über den Impulstibertrager (IUE) an den Schalter führbar ist, welcher von seinem Ein-Zustand in seinen Aus-Zustand kippt (Fig. 6).

11. Ladenetzteil nach Anspruch 1, **dadurch gekennzeichnet, dass** ein einen Übertrager (UET) aufweisender Hilfsschaltwandler (HSW) vorgesehen ist, der bei Herstellen der Steckschnitistellenvexbindung an die Restspannung des Akkumulators (AKU) gelegt wird und eine Start-Versorgungsspannung für eine primäre Ansteuerschaltung (AST) des als Schaltnetzteil ausgebildeten Ladenetzteils liefert (Fig. 5).

## Claims

1. Charger (LNT) for an electrical/electronic device (HAN) powered by a rechargeable battery with an electrically isolating transformer (TRA), the primary circuit (PRS) of which can be fed from a mains power supply and the secondary circuit (SES) of which has a converter/rectifier (GLR) to deliver a charge voltage for the rechargeable battery (AKU) of the device, the charger and device being connectable by means of charging contacts via a plug-in electrical interface (SSS)
**characterised in that**
on establishing the connection at the plug-in interface (SSS), a switch-on signal (sₑ) can be derived via an additional contact from the residual voltage of the rechargeable battery (AKU) which can be forwarded via an isolating interface (ISS) from the secondary circuit (SES) to the primary circuit (PRS) for activating the charger (LNT).

2. Charger according to claim 1, **characterised in that** a switch-off pulse can be generated when the plug-in interface (SSS) is disconnected.

3. Charger according to claim 1 or 2, **characterised in that** the isolating interface (ISS) is formed from the winding (REL) of a relay (REL, r) and a relay contact (r) (Fig. 4).

4. Charger according to claim 1 or 2, **characterised in that** the isolating interface (ISS) is formed from an optical isolator link (LED,PTT,PHT,TRI) (Fig. 3, 7, 8, 9) .

5. Charger according to claim 4, **characterised in that** the light-generating element of the optical isolator link is a light-emitting diode (LED).

6. Switching adapter according to claim 4 or 5, **characterised in that** the light-controlled element of the optical isolator link is a photo TRIAC switch (TRI) forming an alternating current power switch in the primary circuit (Fig. 7, 9).

7. Charger according to claim 4 or 5, **characterised in that** the photo-sensitive element of the optical isolator link is a photo transistor (PHT) located in the primary circuit in the form of a switch or part of a switch arranged between a power rectifier (DI) and an intermediate circuit (ZKW) (Fig. 8).

8. Charger according to claim 4 or 5, **characterised in that** a photo-sensitive switch (PTT) of the optical isolator link is arranged between the intermediate circuit (ZKW) and a primary activation circuit (AST) of the charger, the charger embodied as a switching adapter (Fig. 2)

9. Charger according to claim 1, **characterised in that** the isolating interface (ISS) is formed by a pulse transformer (IUE) provided for transmitting a switch-on pulse generated when the plug-in interface connection is established at a primary activation circuit (AST) of the charger of the primary circuit, the charger being embodied as a switching adapter (Fig.6).

10. Charger according to claim 1, 2 and 9, **characterised in that** a primary activation circuit (AST) of the charger embodied as a switching adapter has an electronic switch (FLF) to which the switch-on pulse can be fed and the switch-off pulse generated when the plug-in interface (SSS) is disconnected is likewise routable via the pulse transformer (IUE) to the switch which toggles from its on state to its off state (Fig. 6).

11. Charger according to claim 1, **characterised in that** an auxiliary switched-mode transformer (HSW) having a transformer (UET) is provided which is applied to the residual voltage of the rechargeable battery (AKU) on the establishment of the plug-in interface connection and delivers a start power supply for a primary activation circuit (AST) of the charger, the charger being embodied as switching adapter (Fig.5).

## Revendications

1. Bloc d'alimentation de charge (LNT) pour un appareil électrique/électronique (HAN) alimenté par un accumulateur, comprenant un transformateur d'isolation galvanique (TRA) qui peut être alimenté depuis un réseau électrique au niveau de son circuit primaire (PRS) et dont le circuit secondaire (SES) comprend un convertisseur-redresseur (GLR) pour la fourniture d'une tension de charge à l'accumulateur (AKU) de l'appareil, le bloc d'alimentation de charge et l'appareil pouvant être reliés au moyen de contacts de charge par le biais d'une interface enfichable électrique (SSS),
**caractérisé en ce que,**
lors de l'établissement de la liaison au niveau de l'interface enfichable (SSS), un signal de mise sous tension (sₑ) peut, par le biais d'un contact supplémentaire, être dérivé de la tension résiduelle de l'accumulateur (AKU), lequel signal peut être transmis du circuit secondaire (SES) au circuit primaire (PRS) par le biais d'une interface isolante (ISS) pour activer le bloc d'alimentation de charge (LNT).

2. Bloc d'alimentation de charge selon la revendication 1, **caractérisé en ce qu'**une impulsion de mise hors tension peut être produite lors de la séparation de l'interface enfichable (SSS).

3. Bloc d'alimentation de charge selon la revendication 1 ou 2, **caractérisé en ce que** l'interface isolante (ISS) est formée de l'enroulement (REL) d'un relais (REL,r) et d'un contact de relais (r).

4. Bloc d'alimentation de charge selon la revendication 1 ou 2, **caractérisé en ce que** l'interface isolante (ISS) est formée par un trajet d'optocoupleur (LED; PTT, PHT, TRI) (Fig. 3, 7, 8, 9).

5. Bloc d'alimentation de charge selon la revendication 4, **caractérisé en ce que** l'élément photogène du trajet d'optocoupleur est une diode électroluminescente (LED).

6. Bloc d'alimentation de charge selon la revendication 4 ou 5, **caractérisé en ce que** l'élément commandé par lumière du trajet d'optocoupleur est un commutateur phototriac (TRI) qui forme un interrupteur d'alimentation en courant alternatif dans le circuit primaire (Fig. 7, 9).

7. Bloc d'alimentation de charge selon la revendication 4 ou 5, **caractérisé en ce que** l'élément photosensible du trajet d'optocoupleur est un phototransistor (PHT) qui est branché en tant qu'interrupteur resp. partie d'un interrupteur entre un redresseur de secteur (D1) et un circuit intermédiaire (ZKW) sur le côté primaire(Fig. 8).

8. Bloc d'alimentation de charge selon la revendication 4 ou 5, **caractérisé en ce qu'**un interrupteur photosensible (PTT) du trajet d'optocoupleur est branché entre le circuit intermédiaire (ZKW) et un circuit de commande primaire (AST) du bloc d'alimentation de charge exécuté en tant que bloc d'alimentation à découpage (Fig. 2).

9. Bloc d'alimentation de charge selon la revendication 1, **caractérisé en ce que** l'interface isolante (ISS) est formée d'un transmetteur d'impulsion (IUE) qui est prévu pour transmettre une impulsion de mise sous tension produite lors de l'établissement de liaison par l'interface d'enfichage à un circuit de commande primaire (AST) du bloc d'alimentation de charge du circuit primaire exécuté en tant que bloc d'alimentation à découpage
(Fig. 6).

10. Bloc d'alimentation de charge selon les revendications 1, 2 et 9, **caractérisé en ce qu'**un circuit de commande primaire (AST) du bloc d'alimentation de charge exécuté en tant que bloc d'alimentation à découpage possède un commutateur électronique (FLF) auquel l'impulsion de mise sous tension peut être amenée et l'impulsion de mise hors tension produite lors de la séparation de l'interface enfichable (SSS) peut également être amenée, par le biais du transmetteur d'impulsion (IUE), au commutateur qui bascule de son état de mise en marche dans son état d'arrêt (Fig. 6).

11. Bloc d'alimentation de charge selon la revendication 1, **caractérisé en ce que** l'on prévoit un convertisseur auxiliaire (HSW) pourvu d'un transmetteur (UET) auquel la tension résiduelle de l'accumulateur (AKU) est appliquée, lors de l'établissement de liaison par l'interface d'enfichage, et qui fournit une tension d'alimentation de départ pour un circuit de commande primaire (AST) du bloc d'alimentation de charge exécuté en tant que bloc d'alimentation à découpage (Fig. 5).
